# EUROPÄISCHE PATENTSCHRIFT

(11) **EP 2 982 621 B1**
(45) Veröffentlichungstag und Bekanntmachung des Hinweises auf die Patenterteilung: **06.06.2018**
(21) Anmeldenummer: 14179965.0
(22) Anmeldetag: 06.08.2014
(51) Int. Cl.: B65G 47/68

(54) **Vereinzelungsvorrichtung für eine Verpackungsmaschine und Verfahren**
Separating device for a packaging machine and method
Dispositif de séparation pour une machine d'emballage et procédé

(43) Veröffentlichungstag der Anmeldung: 10.02.2016
(73) Patentinhaber: MULTIVAC Sepp Haggenmüller SE & Co. KG, 87787 Wolfertschwenden (DE)
(72) Erfinder: Treß, Michael, 87781 Ungerhausen (DE)
(74) Vertreter: Grünecker Patent- und Rechtsanwälte PartG mbB

(56) Entgegenhaltungen:
- WO-A1-2004/039706
- FR-A1- 2 085 168
- JP-A- 08 067 334
- US-A1- 2010 030 373
- US-A1- 2013 248 325

## Beschreibung

Die Erfindung bezieht sich auf eine Vereinzelungseinrichtung gemäß den Merkmalen des Anspruchs 1.

Es ist bekannt, dass Tiefziehverpackungsmaschinen mehrspurig ausgeführt werden können. Für unterschiedliche Produkte können die Tiefziehverpackungsmaschinen derart umgerüstet werden, dass am Ende der Tiefziehverpackungsmaschine eine Gruppe von Packungen mit einer unterschiedlichen Anzahl von Spuren bereitgestellt werden können. Ist für eine Weiterverarbeitung beispielsweise an einem Checkweigher oder an einem Metalldetektor ein einspuriger Transport von vereinzelten und beabstandeten Packungen vorgesehen, so sorgt ein Vereinzelungssystem nach der Tiefziehverpackungsmaschine dafür, dass die Spuren der Tiefziehverpackungsmaschine zeitlich nacheinander mittels einzeln ansteuerbaren Transportbändern transportiert und auf eine einzige Spur zusammengeführt werden. Aus der US 6,464,065 B2 ist eine Transporteinrichtung bekannt, die ein Bandsystem mit zehn gleich breiten Transportbändern offenbart, um Produkte, die sich in Transportrichtung nebeneinander auf einem durchgehend breiten einteiligen Transportband befinden, einzeln und damit unabhängig transportieren und somit in Transportrichtung beabstanden zu können. Der konstruktive Aufwand, eine solche Vielzahl von schmalen Transportriemen einzeln ansteuern zu können, ist sehr hoch und selbst damit ist oft nicht die benötigte Anzahl von Spuren möglich.

Die DE 102010017821 A1 zeigt eine Fördervorrichtung mit mehreren Zuführvorrichtungen zum Transport von mehrspurigen Verpackungen und zum Vereinzeln auf eine einzige Spur. Die einzelnen Zuführvorrichtungen weisen jeweils eine Kupplungsvorrichtung auf, um separat an eine gemeinsame Antriebswalze einkuppeln zu können. Die Zuführvorrichtungen können ausgetauscht werden, um sich an die jeweiligen Erfordernisse anzupassen. Dabei werden die Zuführeinrichtungen zusammen mit deren Kupplungsvorrichtungen und Hubzylindern getauscht, wobei auch die Versorgungsleitungen der Hubzylinder getrennt und nach einem Wiedereinbau angeschlossen werden müssen.

Die US 2010/0248325 A1 offenbart eine Verpackungsmaschine zum Verpacken von gestapelten Produkten wie Blättern. Diese Verpackungsmaschine umfasst ein erstes Bandsystem und ein zweites Bandsystem, die jeweils mehrere Förderbänder aufweisen. Die US 2010/0030373 A1 offenbart ein intelligentes Produkttransportsystem, das ein Bandfördersystem mit einer festgelegten Anzahl von beispielsweise zwei oder fünf Spuren aufweist, US2004/0104100 A1 offenbart weiter ein Bandsystem mit dem technischen Merkmalen des Oberbegriffs des Anspruchs 1. Aufgabe der vorliegenden Erfindung ist es, ein verbessertes Vereinzelungssystem zur Verfügung zu stellen.

Diese Aufgabe wird gelöst durch eine Vereinzelungsvorrichtung für eine Verpackungsmaschine mit den Merkmalen des Anspruchs 1. Vorteilhafte Weiterbildungen der Erfindung sind in den Unteransprüchen angegeben.

Die erfindungsgemäße Vereinzelungsvorrichtung umfasst ein erstes Bandsystem und ein zweites Bandsystem, die aufeinander folgend angeordnet sind, wobei die Bandsysteme jeweils mehrere parallel nebeneinander angeordnete Transportbänder aufweisen. Unter "aufeinanderfolgend angeordnet" ist zu verstehen, dass entweder das erste Bandsystem in Transportrichtung dem zweiten Bandsystem folgt oder umgekehrt. Auch wenn der Ausdruck "aufeinander folgend" als besonders vorteilhaft eine Situation einschließt, in der das eine Bandsystem unmittelbar auf das andere Bandsystem folgt, ist dies keineswegs zwingend. Vielmehr ist durch diese Formulierung auch eine Situation erfasst, in der zwischen den beiden Bandsystemen wenigstens ein weiteres Bandsystem, ein weiteres Transportband oder ein anderes Transportmittel angeordnet ist. Die erfindungsgemäße Vereinzelungsvorrichtung für eine Verpackungsmaschine zeichnet sich dadurch aus, dass das erste Bandsystem umschaltbar ist zwischen einem ersten Betriebsmodus, in dem sämtliche Transportbänder dieses ersten Bandsystems gleichzeitig aktiviert sind, d.h. gleichzeitig in Bewegung sind, und einem zweiten Betriebsmodus. In diesem zweiten Betriebsmodus teilt sich das Bandsystem auf in eine geradzahlige Anzahl n von Transportbändern oder Gruppen von Transportbändern, die jeweils einzeln aktivierbar sind. Die ermöglicht es, zu jedem Zeitpunkt innerhalb des zweiten Betriebsmodus selektiv nur maximal eine Spur einer insgesamt geradzahligen Anzahl von Spuren von Verpackungsmaschinen zu transportieren.

Das zweite Bandsystem ist umschaltbar zwischen einem ersten Betriebsmodus, in dem wiederum sämtliche Transportbänder dieses zweiten Bandsystems gleichzeitig aktiviert sind, und einem zweiten Betriebsmodus. In diesem zweiten Betriebsmodus hat das zweite Bandsystem eine ungeradzahlige Anzahl m, mit m≥3, von Transportbändern oder Gruppen von Transportbändern, die jeweils selektiv einzeln aktivierbar sind, während alle anderen Transportbänder oder Gruppen von Transportbändern des zweiten Bandsystems still stehen. Dies ermöglicht es, zu jedem Zeitpunkt maximal eine Spur aus einer ungeradzahligen Anzahl von Spuren von Verpackungen weiterzutransportieren.

Der Vorteil der Erfindung liegt darin, dass kein Umbau und kein Umrüsten der Vereinzelungsvorrichtung mehr erforderlich ist, wenn die Zahl der von der Verpackungsmaschine bereitgestellten Verpackungen zwischen einer geradzahligen Anzahl und einer ungeradzahlingen Anzahl von Spuren verändert wird. Liegt eine geradzahlige Anzahl von Spuren von Verpackungen vor, so kann das zweite Bandsystem in seinem ersten Betriebsmodus betrieben werden, also einen einfachen Weitertransport durchführen, während das erste Bandsystem in seinem zweiten Betriebsmodus betrieben wird, d.h. die Verpackungen auf der geradzahligen Anzahl von Spuren vereinzelt. Wenn jedoch eine ungeradzahlige Anzahl von Spuren von Verpackungen durch die Verpackungsmaschine bereitgestellt wird, kann das erste Transportsystem in seinem ersten Betriebsmodus betrieben werden, d.h. einen einfachen Weitertransport durchführen, während das zweite Betriebssystem nun in seinem zweiten Betriebsmodus betrieben wird. Dadurch ermöglicht das zweite Bandsystem eine Vereinzelung der Verpackungen auf der ungeradzahligen Anzahl von Spuren.

Besonders günstig ist es, wenn das erste Bandsystem in seinem zweiten Betriebsmodus einstellbar ist zwischen verschiedenen Situationen, in denen verschiedene, stets geradzahlige Anzahlen von Transportbändern oder Gruppen von Transportbändern einzeln aktivierbar sind. Beispielsweise wäre es denkbar, dass das erste Bandsystem einstellbar ist zwischen einer Situation, in der zwei Gruppen von Transportbändern einzeln aktivierbar sind, und einer anderen Situation, in der vier Transportbänder (oder vier Gruppen von Transportbändern) jeweils einzeln aktivierbar sind.

Analog wäre es vorteilhaft, wenn das zweite Bandsystem in seinem zweiten Betriebsmodus verstellbar wäre zwischen verschiedenen Situationen, in denen jeweils verschiedene, stets ungerade Anzahlen von Transportbändern oder Gruppen von Transportbändern einzeln aktivierbar wären. Denkbar wäre beispielsweise eine Situation, in der im zweiten Bandsystem drei Transportbänder oder drei Gruppen von Transportbändern einzeln aktivierbar sind, und eine zweite Situation, in der fünf Transportbänder (oder Gruppen von Transportbändern) einzeln aktivierbar wären. Selbstverständlich könnte jedes Bandsystem auch noch mehr solcher einzeln aktivierbarer Transportbänder oder Gruppen von Transportbändern umfassen.

Das erste Bandsystem und das zweite Bandsystem weisen jeweils einen motorischen Antrieb, vorzugsweise einen Servomotor auf, um Beschleunigungen und Geschwindigkeiten selbst und zueinander anpassen zu können, beispielsweise für eine synchrone Übergabe von Verpackungen von einem Bandsystem auf ein anderes Bandsystem.

Jedes Transportband eines Bandsystems ist mittels einer Kupplungseinheit von dem motorischen Antrieb des jeweiligen Bandsystems antreibbar, um die gewünschte Spurenzahl erzeugen zu können.

Das erste Bandsystem weist vorzugsweise wenigstens vier Transportbänder auf, die dazu konfiguriert sind, eine Spurenanzahl n von eins, zwei und vier erzeugen zu können.

Das zweite Bandsystem weist bevorzugt wenigstens sieben Transportbänder auf, die dazu konfiguriert sind, eine Spurenanzahl n von eins, drei und fünf erzeugen zu können.

Erfindungsgemäß weist das erste Bandsystem eine erste Kupplungseinheit mit wenigstens vier einzeln ansteuerbaren Kupplungen auf, die dazu konfiguriert ist, eine Spurenanzahl n von eins, zwei und vier erzeugen zu können, und/oder weist das zweite Bandsystem eine zweite Kupplungseinheit mit wenigstens sieben einzeln ansteuerbaren Kupplungen auf, die dazu konfiguriert ist, eine Spurenanzahl n von eins, drei und fünf erzeugen zu können.

Die Vereinzelungsvorrichtung ist vorzugsweise mit einer Steuerung verbunden, wobei mittels der Steuerung die einzelnen Kupplungen aktivierbar sind. Dabei kann es sich bei der Steuerung um die Steuerung einer vor der Vereinzelungsvorrichtung angeordneten Tiefziehverpackungsmaschine handeln oder die Vereinzelungsvorrichtung umfasst selbst eine Steuerung, die wiederum mit einer Steuerung der Tiefziehverpackungsmaschine verbunden sein kann. So können Rezepturen für unterschiedliche Vereinzelungen abgespeichert und Programmen zugeordnet werden, um nach einem Chargen- oder Produktwechsel an der Tiefziehverpackungsmaschine die Umrüst - oder Einstellzeit zu minimieren.

Die Vereinzelungsvorrichtung ist bevorzugt dazu konfiguriert, wenigstens eine Spurenanzahl von eins, zwei, drei, vier und fünf vereinzeln zu können, ohne dazu eine Kupplungseinheit auszutauschen.

Das erste Bandsystem umfasst in einer bevorzugten Ausführung eine erste Bandkassette mit den jeweiligen Transportbändern und/oder das zweite Bandsystem eine zweite Bandkassette mit den jeweiligen Transportbändern.

Die Vereinzelungsvorrichtung umfasst vorzugsweise ein drittes Bandsystem mit einer Verjüngungseinheit, um eine vereinzelte Spur für ein nachfolgendes Transportsystem oder eine Station auszurichten bzw. die Abgabeposition der Verpackungen am Ende der Vereinzelungsvorrichtung quer zur Transportrichtung einstellen zu können.

Ein Verfahren zum Betrieb einer Vereinzelungsvorrichtung, um ein mehrspuriges Format von Verpackungen auf eine einzige Spur zusammenzuführen, mit zwei aufeinanderfolgenden Bandsystemen, die jeweils eine Vielzahl von Transportbändern aufweisen, zeichnet sich dadurch aus, dass ein Umschalten zwischen einer ersten Betriebsphase und einer zweiten Betriebsphase erfolgt. In der ersten Betriebsphase sind auf dem ersten Bandsystem sämtliche Transportbänder gleichzeitig aktiviert, sodass hier in ein simpler Weitertransport sämtlicher ankommenden Verpackungen stattfindet, während auf dem zweiten Transportsystem zu jedem Zeitpunkt nur eine einzige aus einer insgesamt ungeraden Anzahl m mit m≥3, von Spuren von Verpackungen transportiert wird. In einer zweiten Betriebsphase hingegen sind sämtliche Transportbänder des zweiten Bandsystems gleichzeitig angetrieben, sodass nun hier ein einfacher Weitertransport sämtlicher ankommenden Verpackungen stattfindet. Auf dem ersten Bandsystem hingegen wird jetzt zu jedem Zeitpunkt nur eine einzige Spur aus einer insgesamt geradzahligen Anzahl n von Spuren von ankommenden Verpackungen weitertransportiert. Zwischen beiden Betriebsphasen kann einfach umgeschaltet werden, ohne dass Umrüstarbeiten oder ein Austausch von Kupplungseinheiten an den Bandsystemen erforderlich werden. Es ist vorzugsweise eine Steuerung vorgesehen, die jede einzelne Kupplung von einer Kupplungseinheit beider Bandsysteme ansteuert, um alle möglichen Spurenanzahlen erzeugen und alle Transportbänder einzeln antreiben zu können.

Vorzugsweise umfasst dabei das erste Bandsystem eine erste Kupplungseinheit mit acht Kupplungen und das zweite Bandsystem eine Kupplungseinheit mit sieben Kupplungen.

Mittels eines dritten Bandsystems mit einer Verjüngungseinheit der Vereinzelungsvorrichtung erfolgt bevorzugt eine Ausrichtung der auf eine einzige Spur vereinzelten Verpackungen zum Ende der Vereinzelungsvorrichtung hin.

Die Reihenfolge des ersten und zweiten Bandsystems kann auch vertauscht sein. Entscheidend ist, dass ein Bandsystem für die Vereinzelung einer geraden Anzahl von Spuren und das andere Bandsystem für eine Vereinzelung einer ungeraden Anzahl von Spuren vorgesehen und konfiguriert ist.

Im Folgenden wird ein vorteilhaftes Ausführungsbeispiel der Erfindung anhand einer Zeichnung näher erläutert. Im Einzelnen zeigen:
- Fig. 1: eine erfindungsgemäße Vereinzelungsvorrichtung für eine Verpackungsmaschine,
- Fig. 2: eine Vereinzelungsvorrichtung in einer Wechselposition für Bandkassetten,
- Fig. 3: eine schematische Draufsicht auf eine Vereinzelungsvorrichtung mit einer zweispurigen Vereinzelung,
- Fig. 4: eine schematische Draufsicht auf eine Vereinzelungsvorrichtung mit einer dreispurigen Vereinzelung,
- Fig. 5: eine schematische Draufsicht auf eine Vereinzelungsvorrichtung mit einer vierspurigen Vereinzelung,
- Fig. 6: eine schematische Draufsicht auf eine Vereinzelungsvorrichtung mit einer fünfspurigen Vereinzelung und
- Fig. 7: eine schematische Draufsicht auf eine Vereinzelungsvorrichtung in einer Ausführung mit Bandkassetten entsprechend der Aufteilung der Kupplungseinheiten.

Gleiche Komponenten sind in den Figuren durchgängig mit gleichen Bezugszeichen versehen.

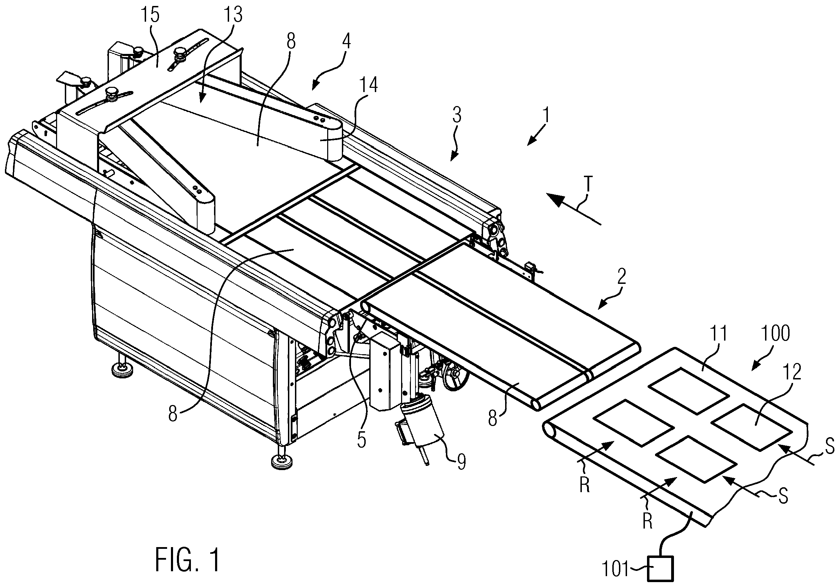

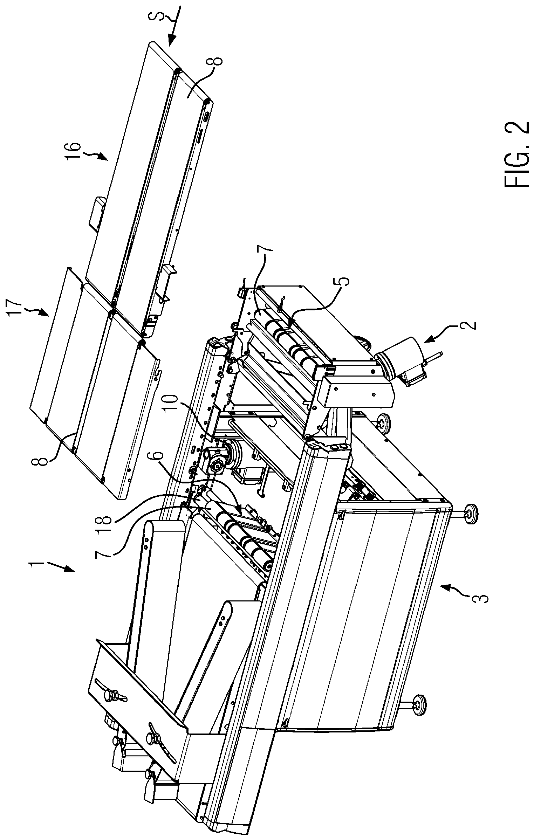

Fig. 1 zeigt eine erfindungsgemäße Vereinzelungsvorrichtung 1 mit einem ersten Bandsystem 2, mit einem zweiten Bandsystem 3 und einem dritten Bandsystem 4, die in einer Transportrichtung T direkt aufeinander folgend angeordnet sind. Das erste Bandsystem 2 umfasst eine in Figur 2 näher dargestellte erste Kupplungseinheit 5 mit acht Kupplungen 7 und zwei Transportbändern 8. Über einen gemeinsamen ersten motorischen Antrieb 9 werden die einzelnen Kupplungen 7 im aktivierten Zustand angetrieben. Die Fig. 1 zeigt auch eine Tiefziehverpackungsmaschine 100 mit einem Abführband 11, auf dem ein Format von vereinzelten Verpackungen 12 in zwei Spuren S und in zwei Reihen R bereitgestellt wird. Die Tiefziehverpackungsmaschine 100 umfasst eine Steuerung 101, die mit den Kupplungen 7 der Vereinzelungsvorrichtung 1 derart steuerungstechnisch verbunden ist, um jede einzelne Kupplung 7 selektiv zu aktivieren und deaktivieren zu können.

Analog zum ersten Bandsystem 2 weist das zweite Bandsystem 3 einen in Fig. 2 näher dargestellten zweiten motorischen Antrieb 10, eine zweite Kupplungseinheit 6 mit sieben Kupplungen 7 und drei Transportbänder 8 auf. Das dritte Bandsystem 4 umfasst ein Transportband 8, das sich über die gleiche Breite erstreckt wie insgesamt die zwei bzw. drei Transportbänder 8 des ersten 2 bzw. zweiten Bandsystems 3. Um die von dem zweiten Bandsystem 3 bereits auf einzelne Spuren S, die seitlich versetzt sind, vereinzelten Verpackungen 12 auf einer gemeinsamen Spur S an einer gewünschten Position am Ende des dritten Bandsystems 4 an weitere Arbeitsstationen weitergeben zu können, ist eine Verjüngungseinheit 13 in Form von zwei seitlichen Führungen 14 oberhalb des Transportbands 8 vorgesehen, die als Führungen 14 optional vertikal angetriebene Transportbänder umfassen können. Über eine Winkeleinstellvorrichtung 15 des dritten Bandsystems 4 können die seitlichen Führungen 14 entsprechend ausgerichtet werden.

Fig. 2 zeigt die Vereinzelungsvorrichtung 1 mit einer abgenommenen ersten Bandkassette 16 mit den Transportbändern 8 des ersten Bandsystems 2 und einer abgenommen zweiten Bandkassette 17 mit den Transportbändern 8 des zweiten Bandsystems 3, um die Bandkassetten 16, 17 durch andere Bandkassetten 16, 17 zu ersetzen, die eine andere Spurenzahl bzw. Anzahl von Transportbändern 8 aufweisen. Dabei verbleiben die erste 5 und zweite Kupplungseinheit 6 in der Vereinzelungsvorrichtung 1. Die Bandkassetten 16, 17 sind über nicht näher dargestellte Rasteinheiten einfach lösbar und befestigbar. In Fig. 2 ist die jeweilige Anzahl und die jeweilige Aufteilung der Kupplungseinheiten 5, 6 auf mehrere Kupplungen 7 gezeigt.

Mittels unterschiedlicher Breiten der Kupplungen 7 und ihrer Anordnung ist die Gesamtbreite selektiv auf eine unterschiedliche Anzahl n, m von Spuren S anpassbar bzw. umschaltbar, wobei die nebeneinander angeordneten Transportbänder 8 der jeweiligen Bandkassette 16, 17 in Summe die gleiche Breite bzw. annähernd die gleiche Breite aufweisen. Die einzelnen Kupplungen 7 sind mittels nicht näher gezeigter Pneumatikzylinder einzeln mit einer Welle 18, beispielhaft am zweiten Bandsystem 3 gezeigt, in Eingriff zu bringen, so dass die aktivierten Transportbänder 8 mit der Geschwindigkeit des zweiten motorischen Antriebs 10 angetrieben werden und die nicht mit der Welle 18 in Eingriff befindlichen Transportbänder 8 in Ruhe sind. So können Verpackungen 12 auf den jeweiligen Spuren S der Bandsysteme 2, 3 bzw. Bandkassetten 16, 17 nacheinander transportiert werden, sodass sich auf dem dritten Bandsystem 4 nur nacheinander und nicht mehr nebeneinander befindliche Verpackungen 12 befinden, die einspurig zum Ende der Vereinzelungsvorrichtung 1 transportiert werden.

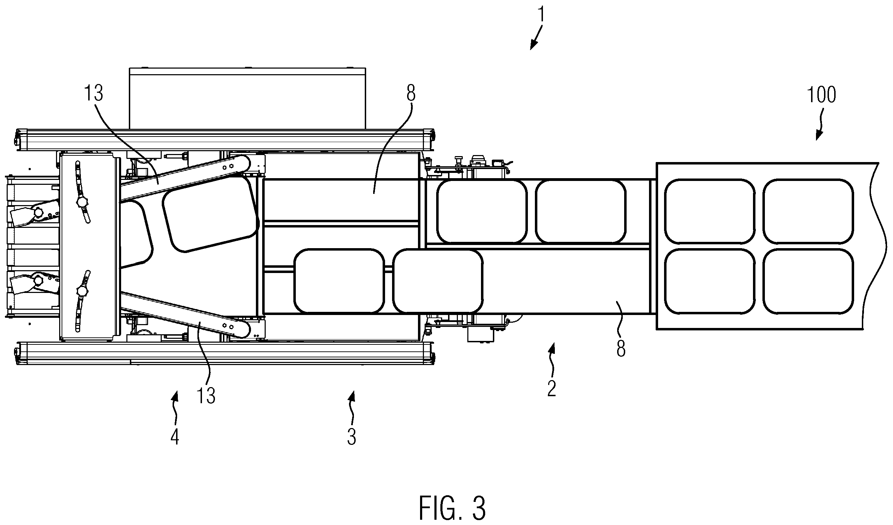

Fig. 3 zeigt in einer schematischen Draufsicht die Vereinzelungsvorrichtung 1 und die Tiefziehverpackungsmaschine 100 mit einer zweispurigen Verpackungsabführung von Verpackungen 12. Die Vereinzelungsvorrichtung 1 umfasst ein erstes Bandsystem 2 mit zwei Transportbändern 8 und ein zweites Bandsystem 3 mit drei Transportbändern 8.

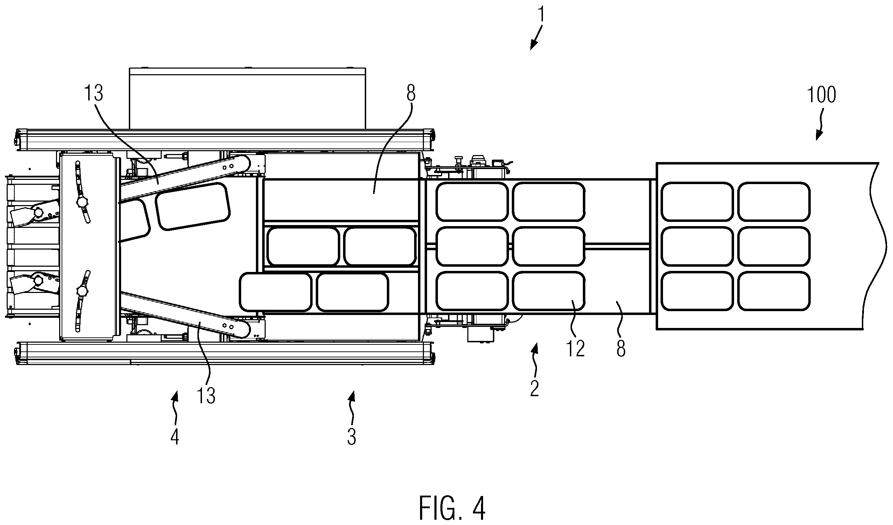

Im Gegensatz zu Fig. 3 zeigt Fig. 4 die Vereinzelungsvorrichtung 1 und die Tiefziehverpackungsmaschine 100 mit einer dreispurigen Verpackungsabführung. Die Vereinzelungsvorrichtung 1 entspricht der aus Fig. 3.

In Fig. 3 werden die Verpackungen 12 zweispurig vom ersten Bandsystem 2 von der Tiefziehverpackungsmaschine 100 übernommen, wobei insgesamt vier Verpackungen 12 in einem Format 2x2 transportiert werden. Über ein Aktivieren nur eines Transportbands 8, während das andere steht, wird eine Spur S von zwei Verpackungen 12 auf das zweite Bandsystem 3 übergeben. Die Transportbänder 8 des zweiten Bandsystems 3 sind alle gleichzeitig angetrieben und transportieren somit die Verpackungen 8 in Zweiergruppen direkt weiter an das dritte Bandsystem 4, wo die Verpackungen 12 mittels der seitlichen Führungen 14 ausgerichtet werden und entlang einer gemeinsamen Spur die Vereinzelungsvorrichtung 1 verlassen. Hier befindet sich demnach das zweite Bandsystem 3 in seinem ersten Betriebsmodus, das erste Bandsystem 2 hingegen in seinem zweiten Betriebsmodus.

Im Unterschied zu Fig. 3, in der das erste Bandsystem 2 die Spuren S vereinzelt, ist in Fig. 4 das zweite Bandsystem 3 für die Vereinzelung von den drei Spuren S, die von der Tiefziehverpackungsmaschine 100 auf das erste Bandsystem 2 übernommen werden, verantwortlich. Dabei transportiert das erste Bandsystem 2 jetzt in seinem ersten Betriebsmodus die sechs Verpackungen 12 direkt an das zweite Bandsystem 3 weiter, wobei beide Transportbänder 8 des ersten Bandsystems 2 synchron angetrieben werden. Auf dem zweiten Bandsystem 3 werden die Transportbänder 8 nacheinander einzeln aktiviert und die benachbarten Spuren S, also jeweils zwei Verpackungen 12, nacheinander an das dritte Bandsystem 4 übergeben. Das zweite Bandsystem 3 befindet sich jetzt also in seinem zweiten Betriebsmodus. Somit kann ein Vereinzelungssystem 1 mit zwei und drei Transportbändern 8 am ersten 2 oder zweiten Bandsystem 3 ohne Umrüsten Verpackungen 12 wahlweise zweispurig und dreispurig von der Tiefziehverpackungsmaschine 100 übernehmen und auf eine einzige Spur vereinzeln. Das Aktivieren der einzelnen Transportbänder 8 bzw. der Kupplungen 7 kann überdie Steuerung 101 der Tiefziehverpackungsmaschine 100 oder eine Steuerung der Vereinzelungsvorrichtung 1 selbst erfolgen.

Die Aufteilung der Spurenzahl des ersten und zweiten Bandsystems 2, 3 kann auch getauscht sein, da dies keinen Einfluss auf die Erfindung macht. Lediglich jeweils ein Bandsystem 2, 3 ist pro Betriebsphase für die Vereinzelung verantwortlich.

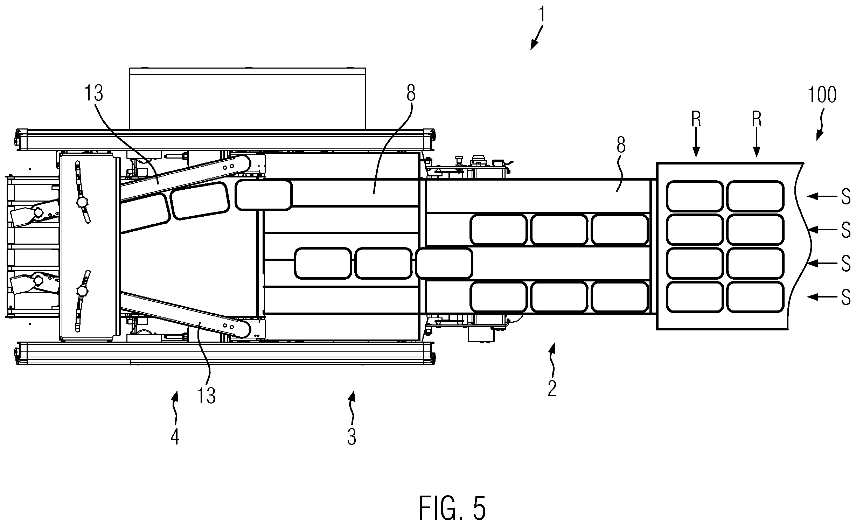

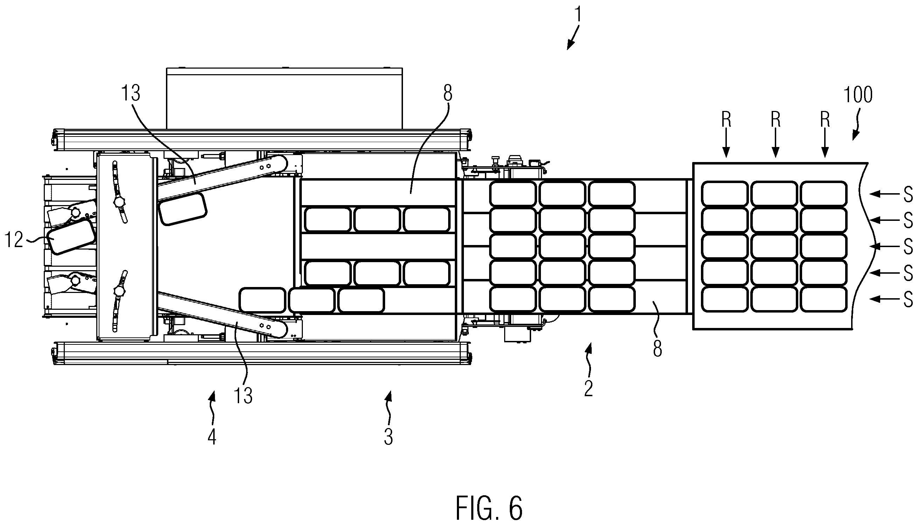

In den Figuren 5 und 6 ist die Vereinzelungsvorrichtung 1 identisch ausgeführt. Das erste Bandsystem 2 weist vier Transportbänder 8 und das zweite Bandsystem 3 weist fünf Transportbäder 8 auf.

In Fig. 5 stellt die Tiefziehverpackungsmaschine 100 acht Verpackungen 12 formatweise mit vier Spuren S und zwei Reihen R zum Vereinzeln bereit. Analog zur Fig. 3 vereinzelt das erste Bandsystem 2 die vier Spuren S, während diese vier Spuren S von dem zweiten Bandsystem 3 lediglich an das dritte Bandsystem 4 weitertransportiert werden, indem alle fünf Transportbänder 8 des zweiten Bandsystems 3 gemeinsam angetrieben sind und somit synchron laufen.

In Fig. 6 stellt die Tiefziehverpackungsmaschine 100 fünfzehn Verpackungen 12 formatweise mit fünf Spuren S und drei Reihen R zum Vereinzeln bereit. Analog zur Fig. 4 vereinzelt das zweite Bandsystem 3 die fünf Spuren S, während diese fünf Spuren S von dem ersten Bandsystem 2 lediglich von der Tiefziehverpackungsmaschine 100 übernommen werden und an das zweite Bandsystem 3 weitertransportiert werden, indem alle vier Transportbänder 8 des zweiten Bandsystems 2 gemeinsam angetrieben sind und somit synchron laufen.

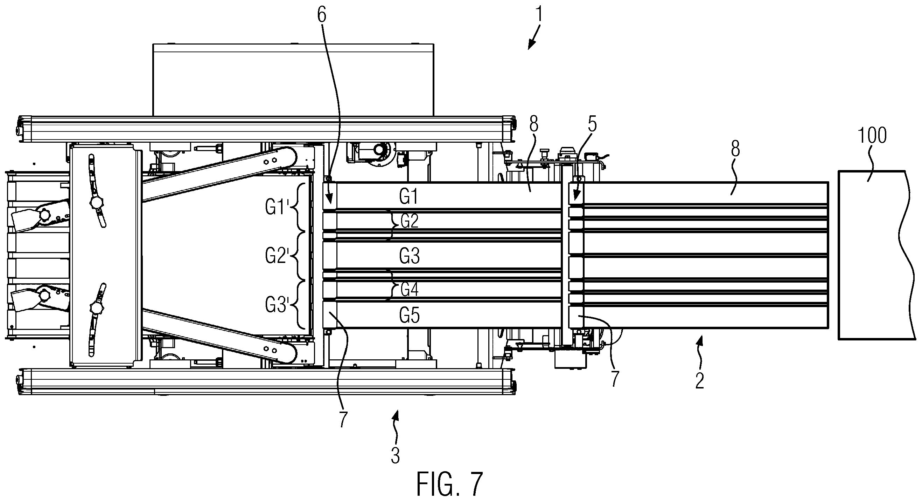

Fig. 7 zeigt eine erfindungsgemäße Variante in einer schematischen Draufsicht, wobei die Anzahl der Aufteilung bzw. Breite der Transportbändern 8 den Kupplungseinheiten 5, 6 entspricht. Dabei sind die Transportbänder 8, wie in den vorherigen Figuren gezeigt, auch mittels einer ersten und zweiten Bandkassette 16, 17 vorgesehen, um über die Kupplungseinheiten 5, 6 bzw. die einzeln ansteuerbaren Kupplungen 7 jedes Transportband 8 selektiv einzeln oder gemeinsam mit weiteren Transportbändern 8 je nach gewünschter Spurenkombination ansteuern zu können.

Um wahlweise zwei, vier oder sechs jeweils annähernd gleich breite Transportbänder 8 antreiben zu können, ist in der Fig. 7 die erste Kupplungseinheit 5 sichtbar dargestellt und eine Variante mit acht Transportbändern 8 gezeigt. Diese Ausführung der ersten Kupplungseinheit 5 zeichnet sich durch unterschiedlich schmale und breite Kupplungen 7 aus. Speziell die Ausführung breit-schmal-schmal-breit-breit-schmal-schmal-breit ermöglicht das Antreiben von einzelnen Transportbändern 8 und damit das spurenweise Vereinzeln von wahlweise zwei, vier oder sechs Spuren S, wobei lediglich die erste Bandkassette 16 getauscht wird oder acht Transportbänder 8 in der Aufteilung analog zur ersten Kupplungseinheit 5 vorgesehen sind.

Für das zweite Bandsystem 3 ist eine zweite Kupplungseinheit 6 mit sieben Kupplungen 7 für sieben Transportbänder 8 gezeigt. Die Aufteilung ist für die Vereinzelung von wahlweise drei und fünf Spuren S vorgesehen. Dabei sind drei unterschiedliche Breiten für die Kupplungen 7 bzw. Transportbänder 8 vorgesehen, nämlich schmal, mittel und breit, wobei die Aufteilung in Form von breit-mittel-schmal-breit-schmal-mittel-breit ausgeführt ist. Auch hier können zwei unterschiedliche zweite Bandkassetten 17 mit drei bzw. fünf Transportbändern 8 gegeneinander getauscht werden, oder alternativ können sieben Transportbänder 8 in der Aufteilung analog zur zweiten Kupplungseinheit 6 vorgesehen sein. In diesem Fall können auch die zweiten Bandkassetten 17 entfallen und die Spurenanzahl zwei, drei, vier, fünf und sechs ohne Umrüstarbeiten an der Vereinzelungsvorrichtung 1 vereinzelt werden.

In jeder Variante der Erfindung ist es denkbar, dass in einem Bandsystem 2, 3 einander benachbarte Transportbänder 8 entweder unabhängig voneinander aktiviert werden, oder aber steuerungstechnisch zu bestimmten Gruppen von Transportbändern zusammengefasst sind, die gemeinsam aktiviert werden. Lediglich beispielhaft ist dies in Figur 7 für das zweite Bandsystem 3 angedeutet, kann jedoch analog ebenso auch im ersten Bandsystem 2 vorgesehen sein. In einer ersten Konfiguration umfasst das zweite Bandsystem 3 fünf jeweils gleich breite Gruppen von Transportbändern G1 bis G5. Dabei umfassen die Gruppen G1, G2 und G5 jeweils nur ein einziges Transportband 8, während die beiden dazwischen befindlichen Gruppen G2 und G4 aus jeweils zwei einander benachbarten Transportbändern 8 gebildet sind. In der Konfiguration können also fünf Gruppen G1 bis G5 von Transportbändern 8 jeweils individuell aktiviert werden. In einer zweiten Konfiguration hingegen gibt es drei Gruppen G1' bis G3', die jeweils individuell aktivierbar sind, um insgesamt drei Spuren von Verpackungen 12 einzeln transportieren zu können. Die beiden äußeren Gruppen G1' und G3' umfassen jeweils zwei Transportbänder 8, während die mittlere Gruppe G2' drei nebeneinander liegende Transportbänder 8 umfasst. Eine Gruppe von Transportbändern 8 kann also jeweils nur ein einziges oder aber eine Mehrzahl von Transportbändern 8 umfassen. Das Umschalten zwischen der ersten Konfiguration mit fünf Gruppen G1 bis G5 und der zweiten Konfiguration mit lediglich drei Gruppen G1' bis G3' von Transportbändern erfolgt lediglich steuerungstechnisch durch das geeignete, individuelle Ansteuern einer Gruppe von Transportbändern 8 jeweils zugeordneter Kupplungen 7 der Kupplungseinheiten 5 bzw. 6.

Es fällt auch eine Ausführung unter die erfindungsgemäße Vereinzelungsvorrichtung 1, bei der gemäß Fig. 7 die Transportbänder 8 direkt mit den Kupplungen 7 in Eingriff stehen, ohne dass austauschbare Bandkassetten 16, 17 vorgesehen sind.

## Patentansprüche

1. Vereinzelungsvorrichtung (1) für eine Verpackungsmaschine (100), umfassend ein erstes Bandsystem (2) und ein zweites Bandsystem (3), die aufeinander folgend angeordnet sind, wobei die Bandsysteme (2, 3) jeweils mehrere parallel nebeneinander angeordnete Transportbänder (8) aufweisen, wobei das erste Bandsystem (2) umschaltbar ist zwischen einem ersten Betriebsmodus, in dem sämtliche Transportbänder (8) des ersten Bandsystems (2) gleichzeitig aktiviert sind, und einem zweiten Betriebsmodus, in dem eine gerade Anzahl n von Transportbändern (8) oder Gruppen von Transportbändern (8) unabhängig voneinander aktivierbar sind, um zu jedem Zeitpunkt im zweiten Betriebsmodus maximal eine einzelne Spur (S) aus einer geraden Anzahl von Spuren (S) von Verpackungen (12) zu transportieren,
und wobei das zweite Bandsystem (3) umschaltbar ist zwischen einem ersten Betriebsmodus, in dem sämtliche Transportbänder (8) des zweiten Bandsystems (3) gleichzeitig aktiviert sind, und einem zweiten Betriebsmodus, in dem eine ungeradzahlige Anzahl m von mindestens drei Transportbändern (8) oder Gruppen von Transportbändern (8) jeweils einzeln aktivierbar sind, um zu jedem Zeitpunkt in diesem zweiten Betriebsmodus maximal eine einzige Spur (S) aus einer ungeraden Anzahl m von Spuren (S) von Verpackungen (12) zu transportieren wobei das erste Bandsystem (2) und das zweite Bandsystem (3) jeweils einen motorischen Antrieb (9, 10), vorzugsweise einen Servomotor, aufweisen, **dadurch gekennzeichnet, dass** jedes Transportband (8) eines Bandsystems (2, 3) mittels einer Kupplungseinheit (5, 6) mit dem motorischen Antrieb (9, 10) des jeweiligen Bandsystems (2, 3) antreibbar ist,
wobei das erste Bandsystem (2) eine erste Kupplungseinheit (5) mit wenigstens vier einzeln ansteuerbaren Kupplungen (7) aufweist, die dazu konfiguriert ist, wahlweise eine Spurenanzahl n von eins, zwei oder vier erzeugen zu können, und/oder wobei das zweite Bandsystem (3) eine zweite Kupplungseinheit (6) mit wenigstens sieben einzeln ansteuerbaren Kupplungen (7) aufweist, die dazu konfiguriert ist, wahlweise eine Spurenanzahl n von eins, drei oder fünf erzeugen zu können,
wobei mittels unterschiedlicher Breiten der Kupplungen (6, 7) und ihrer Anordnung eine Gesamtbreite des ersten oder zweiten Bandsystems (2, 3) selektiv auf eine unterschiedliche Anzahl n, m von Spuren (S) umschaltbar ist.

2. Vereinzelungsvorrichtung nach einem der vorangehenden Ansprüche, **dadurch gekennzeichnet, dass** das erste Bandsystem (2) wenigstens vier Transportbänder (8) aufweist, die dazu konfiguriert sind, wahlweise eine Spurenanzahl n von eins, zwei oder vier erzeugen zu können.

3. Vereinzelungsvorrichtung nach einem der vorangehenden Ansprüche, **dadurch gekennzeichnet, dass** das zweite Bandsystem (3) wenigstens sieben Transportbänder (8) aufweist, die dazu konfiguriert sind, wahlweise eine Spurenanzahl n von eins, drei oder fünf erzeugen zu können.

4. Vereinzelungsvorrichtung nach einem der vorangehenden Ansprüche , **dadurch gekennzeichnet, dass** die Vereinzelungsvorrichtung (1) mit einer Steuerung (101) verbunden ist, wobei mittels der Steuerung (101) die einzelnen Kupplungen (7) aktivierbar sind.

5. Vereinzelungsvorrichtung nach einem der vorangehenden Ansprüche, **dadurch gekennzeichnet, dass** die Vereinzelungsvorrichtung (1) dazu konfiguriert ist, wahlweise wenigstens eine Spurenanzahl (n) von eins, zwei, drei, vier und fünf vereinzeln zu können, ohne eine Kupplungseinheit (5, 6) auszutauschen.

6. Vereinzelungsvorrichtung nach einem der vorangehenden Ansprüche, **dadurch gekennzeichnet, dass** das erste Bandsystem (2) eine erste Bandkassette (16) mit den jeweiligen Transportbändern (8) und/oder das zweite Bandsystem (3) eine zweite Bandkassette (17) mit den jeweiligen Transportbändern (8) umfasst.

7. Vereinzelungsvorrichtung nach einem der vorangehenden Ansprüche, **dadurch gekennzeichnet, dass** die Vereinzelungsvorrichtung (1) ein drittes Bandsystem (4) mit einer Verjüngungseinheit (13) umfasst.

## Claims

1. Separating device (1) for a packaging machine (100), comprising a first belt system (2) and a second belt system (3) which are successively arranged, wherein the belt systems (2, 3) each have a plurality of conveyor belts (8) arranged in parallel side by side, wherein the first belt system (2) is switchable between a first operating mode in which all conveyor belts (8) of the first belt system (2) are activated simultaneously, and a second operating mode in which an even number n of conveyor belts (8) or groups of conveyor belts (8) are activatable independently of one another in order to transport a maximum of a single track (S) from an even number of tracks (S) of packages (12) at any time in the second operating mode,
and wherein the second belt system (3) is switchable between a first operating mode in which all conveyor belts (8) of the second belt system (3) are activated simultaneously, and a second operating mode in which an odd number m of at least three conveyor belts (8) or groups of conveyor belts (8) are each individually activatable in order to transport a maximum of a single track (S) from an odd number m of tracks (S) of packages (12) at any time in this second operating mode,
wherein the first belt system (2) and the second belt system (3) each have a motor drive (9, 10), preferably a servomotor,
**characterized in**
**that** each conveyor belt (8) of a belt system (2, 3) is drivable by means of a coupling unit (5, 6) with the motor drive (9, 10) of the respective belt system (2, 3),
wherein the first belt system (2) comprises a first coupling unit (5) with at least four individually actuable couplers (7) which is configured to be adapted to selectively generate a track number n of one, two or four, and/or wherein the second belt system (3) comprises a second coupling unit (6) with at least seven individually actuable couplers (7) which is configured to be adapted to selectively generate a track number n of one, three or five, wherein by way of different widths of the couplers (6, 7) and their arrangement a total width of the first or second belt system (2, 3) is selectively switchable to a different number n, m of tracks (S).

2. Separating device according to claim 1, **characterized in that** the first belt system (2) comprises at least four conveyor belts (8) which are configured to be adapted to selectively generate a track number n of one, two or four.

3. Separating device according to any one of the preceding claims, **characterized in that** the second belt system (3) comprises at least seven conveyor belts (8) which are configured to be adapted to selectively generate a track number n of one, three or five.

4. Separating device according to any one of the preceding claims, **characterized in that** the separating device (1) is connected to a controller (101), wherein by way of the controller (101) the individual couplers (7) are activatable.

5. Separating device according to any one of the preceding claims, **characterized in that** the separating device (1) is configured to be adapted to selectively separate at least one track number (n) of one, two, three, four and five without replacing a coupling unit (5, 6).

6. Separating device according to any one of the preceding claims, **characterized in that** the first belt system (2) comprises a first belt cassette (16) with the respective conveyor belts (8) and/or the second belt system (3) comprises a second belt cassette (17) with the respective conveyor belts (8).

7. Separating device according to any one of the preceding claims, **characterized in that** the separating device (1) comprises a third belt system (4) with a tapering unit (13).

## Revendications

1. Dispositif séparateur (1) pour une machine d'emballage (100), comprenant un premier système à bandes (2) et un deuxième système à bandes (3), qui sont agencés de manière à se succéder l'un l'autre, dispositif séparateur
dans lequel les systèmes à bandes (2, 3) comprennent chacun plusieurs bandes de transport (8) agencées parallèlement côte à côte,
dans lequel le premier système à bandes (2) peut être commuté entre un premier mode de fonctionnement pour lequel la totalité des bandes de transport (8) du premier système à bandes (2) sont activées simultanément, et un deuxième mode de fonctionnement pour lequel un nombre pair n de bandes de transport (8) ou groupes de bandes de transport (8) peuvent être activés indépendamment les uns des autres, en vue de transporter à chaque instant, dans le deuxième mode de fonctionnement, au maximum une seule voie (S) d'un nombre pair de voies (S) d'emballages (12),
dans lequel le deuxième système à bandes (3) peut être commuté entre un premier mode de fonctionnement pour lequel la totalité des bandes de transport (8) du deuxième système à bandes (3) sont activées simultanément, et un deuxième mode de fonctionnement pour lequel un nombre impair m d'au moins trois bandes de transport (8) ou groupes de bandes de transport (8) peuvent être activés respectivement de manière individuelle, en vue de transporter à chaque instant, dans ce deuxième mode de fonctionnement, au maximum une seule voie (S) d'un nombre impair de voies (S) d'emballages (12), et
dans lequel le premier système à bandes (2) et le deuxième système à bandes (3) comprennent respectivement un entraînement à moteur (9, 10) de préférence un servomoteur,
**caractérisé en ce que**
chaque bande de transport (8) d'un système à bandes (2, 3) peut être entraînée au moyen d'une unité d'embrayage (5, 6), à l'aide de l'entraînement à moteur (9, 10) du système à bandes (2, 3) respectif,
le premier système à bandes (2) comporte une première unité d'embrayage (5) avec au moins quatre embrayages (7) pouvant être commandés individuellement, qui est configurée pour pouvoir produire sélectivement un nombre de voies n égal à un, deux ou quatre, et/ou le deuxième système à bandes (3) comporte une deuxième unité d'embrayage (6) avec au moins sept embrayages (7) pouvant être commandés individuellement, qui est configurée pour produire sélectivement un nombre de voies n égal à un, trois ou cinq, et
au moyen d'embrayages (6, 7) de largeurs différentes et de leur agencement, une largeur globale du premier et du deuxième système de bandes (2, 3) peut être commutée sélectivement sur un nombre n, m différent de voies (S).

2. Dispositif séparateur selon l'une des revendications précédentes, **caractérisé en ce que** le premier système à bandes (2) comporte au moins quatre bandes de transport (8), qui sont configurées pour pouvoir produire sélectivement un nombre de voies n égal à un, deux ou quatre.

3. Dispositif séparateur selon l'une des revendications précédentes, **caractérisé en ce que** le deuxième système à bandes (3) comporte au moins sept bandes de transport (8), qui sont configurées pour pouvoir produire sélectivement un nombre de voies n égal à un, trois ou cinq.

4. Dispositif séparateur selon l'une des revendications précédentes, **caractérisé en ce que** le dispositif séparateur (1) est relié à une commande (101), les embrayages (7) individuels pouvant être activés au moyen de la commande (101).

5. Dispositif séparateur selon l'une des revendications précédentes, **caractérisé en ce que** le dispositif séparateur (1) est configuré pour pouvoir assurer sélectivement la séparation d'au moins un nombre de voies (n) de un, deux, trois, quatre et cinq, sans échanger une unité d'embrayage (5, 6).

6. Dispositif séparateur selon l'une des revendications précédentes, **caractérisé en ce que** le premier système à bandes (2) comprend une première cassette à bandes (16) avec les bandes de transport (8) respectives, et/ou le deuxième système à bandes (3) comprend une deuxième cassette à bandes (17) avec les bandes de transport (8) respectives.

7. Dispositif séparateur selon l'une des revendications précédentes, **caractérisé en ce que** le dispositif séparateur (1) comprend un troisième système à bandes (4) comportant une unité de rétrécissement (13) .
